# EUROPÄISCHE PATENTSCHRIFT

(11) **EP 1 867 030 B1**
(45) Veröffentlichungstag und Bekanntmachung des Hinweises auf die Patenterteilung: **05.03.2014**
(21) Anmeldenummer: 06707470.8
(22) Anmeldetag: 08.03.2006
(51) Int. Cl.: H02K 1/27, H02K 16/02

(54) **ELEKTRISCHE MASCHINE UND VERFAHREN ZUR FELD- UND ANKERSTELLUNG EINER PERMANENTERREGTEN ELEKTRISCHEN MASCHINE**
ELECTRICAL MACHINE AND METHOD FOR SETTING THE FIELD AND ARMATURE OF A PERMANENTLY EXCITED ELECTRICAL MACHINE
MACHINE ELECTRIQUE ET PROCEDE DE REGLAGE DE CHAMP ET D'ARMATURE SUR UNE MACHINE ELECTRIQUE A EXCITATION PERMANENTE

(30) Priorität: 06.04.2005 DE 102005015657
(43) Veröffentlichungstag der Anmeldung: 19.12.2007
(73) Patentinhaber: Bayerische Motoren Werke Aktiengesellschaft, 80809 München (DE)
(72) Erfinder: FRANKE, Torsten, 80469 München (DE)
(86) Internationale Anmeldenummer: PCT/EP2006/002109
(87) Internationale Veröffentlichungsnummer: WO 2006/105839

(56) Entgegenhaltungen:
- EP-A- 1 237 259
- DE-A1- 2 231 590
- FR-A- 2 831 345
- US-A- 4 879 484
- PATENT ABSTRACTS OF JAPAN Bd. 2000, Nr. 10, 17. November 2000 (2000-11-17) & JP 2000 201461 A (HONDA MOTOR CO LTD; HITACHI METALS LTD), 18. Juli 2000 (2000-07-18) in der Anmeldung erwähnt

## Beschreibung

Die Erfindung betrifft eine elektrische Maschine, mit einem Stator der eine Wicklung trägt, und mit einem durch einen Luftspalt zu dem Stator beabstandet angeordneten drehbaren Läufer, der im Wesentlichen aus wenigstens zwei koaxialen, gegeneinander verdrehbaren Läuferabschnitten besteht, bei dem jeder Läuferabschnitt eine Anordnung von Permanentmagneten mit alternierend radial nach außen zeigenden Polaritäten trägt, und mit einer Stelleinrichtung zum Verdrehen der Läuferabschnitte gegeneinander.

Die Erfindung betrifft weiterhin ein Verfahren zur Feld- und Ankerstellung einer permanenterregten elektrischen Maschine, insbesondere für Kraftfahrzeuge, deren Drehzahlbereich in einen Ankerstellbereich und in einen Feldstellbereich unterteilt ist, mit einem Läufer, der wenigstens zwei gegeneinander verdrehbare Läuferabschnitte aufweist, die jeweils eine Anordnung von mit alternierenden Polaritäten radial nach außen zeigenden Permanentmagneten aufweisen.

Im Automobilbau werden neben Gleichstrommotoren und Reluktanzmotoren Elektromotoren asynchroner Bauart (Kurzschlussläufer) sowie Elektromotoren synchroner Bauart (Klauenpolmaschine, permanenterregte Maschine) eingesetzt. Die konkrete Auswahl richtet sich dabei nach der jeweiligen Applikation, in welcher spezifische Vorteile der jeweiligen Bauart genutzt werden können. Besonderes Augenmerk gilt dabei dem weiten Drehzahlbereich, den elektrische Maschinen, die mit dem Antriebsstrang gekoppelt sind, abdecken müssen.

Für das Betriebsverhalten einer elektrischen Maschine ist ihre Drehzahl-Drehmoment-Kennlinie maßgebend. Dabei werden üblicherweise zwei Drehzahlbereiche, ein Ankerstellbereich (Grunddrehzahlbereich) mit konstantem maximalem Moment und ein Feldstellbereich (oberer Drehzahlbereich, bei Drehfeldmaschinen auch Feldschwächbereich genannt) mit idealer Weise konstanter maximaler elektrischer Leistung unterschieden. Die in Abhängigkeit der jeweiligen Betriebsparameter der elektrischen Maschine möglichen, bzw. zulässigen Drehzahlen, werden durch die sogenannte Feldstellung, bzw. Ankerstellung eingestellt. Im Ankerstellbereich wird üblicherweise die Drehzahl durch die Ankerstellung über die Ankerspannung eingestellt, zur Einstellung höherer Drehzahlen wird im Feldstellbereich eine Feldstellung (Feldschwächung) vorgenommen.

Insbesondere bei der Entwicklung von Hybrid- oder Elektrofahrzeugen sowie bei Generatoren, bzw. Startergeneratoren von Kraftfahrzeugen ist eine gute Feldstellbarkeit für die Auswahl einer elektrischen Maschine ein wichtiges Kriterium. Für einen generatorischen Betrieb ist vor allem ein optimaler Betrieb im Feldstellbereich von erheblichem Interesse. Für die geforderte weite Drehzahlspreizung an einem Verbrennungsmotor von ca. 6000 1/min werden deshalb häufig die Klauenpolmaschine, bzw. die Asynchronmaschine eingesetzt, da beide über einen weit nutzbaren Feldstellbereich verfügen. Bei der Klauenpolmaschine wird das Feld direkt über die auf dem Rotor (Läufer) befindliche Erregerwicklung gestellt; diese Art der Feldstellung ist sehr effizient, weshalb die im Feldstellbereich maximal verfügbare Maschinenleistung mit zunehmender Drehzahl kaum abnimmt. Die Feldstellung der Klauenpolmaschine ist jedoch mit einem schlecht ausgenutzten sogenannten Eisenkreis, der aus dem magnetischen Kreis, abgeleitet aus den geschlossenen Feldlinien, bzw. dem geschlossenen magnetischen Fluss und den Bauteilen der Maschine (elektrische Leiter, Magnete, ferromagnetische Bauteile, in der Regel geschichtete Elektrobleche) einschließlich der Überbrückung des Luftspaltes zwischen Stator und Rotor gebildet wird, verbunden, weshalb die Klauenpolmaschine für größere Leistungen nicht vorteilhaft ist. Bei der Asynchronmaschine wird die Leistung für das Erregerfeld indirekt über den Stator (Ständer) eingeprägt, die Feldstellung erfolgt indirekt über eine Einstellung des Phasenwinkels (Winkel zwischen magnetischem und elektrischem Feldvektor) der in den Ständer des Motors eingeprägten Spannung. Die Feldstellung der Asynchronmaschine ist deshalb mit erheblichen Verlusten behaftet, wodurch die maximal verfügbare Maschinenleistung mit zunehmender Drehzahl mehr oder weniger stark (je nach Auslegung) abnimmt. Dies wirkt sich ungünstig auf das Betriebsverhalten aus. Im Vergleich Klauenpolmaschine - Asynchronmaschine zeichnet sich die asynchrone Maschine durch eine bessere Ausnutzung des Eisenkreises und durch eine höhere Robustheit gegenüber der Klauenpolmaschine aus. Beide Systeme konkurrieren deshalb bei Anwendungen kleiner Leistung gegeneinander. Bei Anwendungen größerer Leistungen ist die bessere Ausnutzung des Eisenkreises für den bevorzugten Einsatz der Asynchronmaschine maßgebend.

Permanente Synchronmaschinen zeichnen sich hingegen durch einen besseren Wirkungsgrad aus und werden deshalb ebenfalls für diese Anwendungen favorisiert.

Bei bekannten permanenterregten Synchronmaschinen erfolgt die Feldstellung von außen, d.h. indirekt über den Ständer. Dies wird beispielsweise wie bei den Asynchronmaschinen indirekt über den Phasenwinkel der in den Ständer des Motors eingeprägten Spannung realisiert.

Nachteilig dabei wirkt sich aus, dass (im Gegensatz zur Asynchronmaschine) jedoch vom Ständer her ein das Läuferfeld kompensierendes Gegenfeld erzeugt wird. Die Effizienz der Feldstellung ist deshalb relativ gering. Dadurch fällt die im Feldstellbereich maximal verfügbare Maschinenleistung steil ab. Der Feldstellbereich ist deshalb sehr klein, der nutzbare Drehzahlbereich überstreicht im Allgemeinen nur den Bereich bis zur doppelten sogenannten Eckdrehzahl (häufig gleich Nenndrehzahl) der Maschine. Zudem können bei der "kompensierenden" oder "aktiven" Feldschwächung Probleme auftreten. Tritt innerhalb der Motoren/Generatorensteuerung ein Fehler auf, kann die Feldschwächung nicht mehr aufrechterhalten werden. Es lassen sich folgende zwei Fehlerfälle beschreiben: Erstens - die vom Läufer induzierte Spannung tritt instantan an die Klemmen der Maschine und wird nur noch durch den Ladezustand eines Zwischenkreiskondensators begrenzt. Der Energieinhalt der Last wird daraufhin solange an den Zwischenkreis abgegeben, bis die Zwischenkreisspannung mit der Leerlaufklemmenspannung der Maschine übereinstimmt. Für Lastkonfigurationen mit antreibendem Verbrennungsmotor oder schiebender Last (z.B. rollendes Fahrzeug) kann der Zwischenkreis nicht ausreichend groß dimensioniert werden, um die gesamte Energie bis zum Einstellen des Spannungsgleichgewichtes zwischen einem Umrichter und der Maschine aufzunehmen. Zweitens bewirkt bei einem schwerem Fehler innerhalb der Motorensteuerung (Umrichter- oder Klemmenkurzschluss) die weiterhin anstehende Erregung des Ständerkreises durch den Läufer ein Kurzschlussmoment. Dieses wirkt als Bremsmoment auf die rotierenden Läufer und die damit mechanisch gekoppelten Aggregate. Für automobile Anwendungen ist ein solches Verhalten unerwünscht. Bei einer starren Kopplung der Elektromaschine mit dem Antriebsstrang wirkt sich dieses unkontrollierte Moment auf die Längsdynamik des Fahrzeuges aus. Im Extremfall kann eine Einschränkung der Kontrolle über das Fahrzeug hierbei nicht ausgeschlossen werden.

Aus der JP 2000 201 461 A ist ein bürstenloser Motor mit einem Stator mit einer Wicklung und einem Rotor, bzw. Läufer mit Permanentmagneten bekannt, wobei der Läufer aus zwei zylinderförmigen, koaxial angeordneten Abschnitten mit jeweils einem ferromagnetischen Rotorkern gebildet ist. Jeder der beiden Läuferabschnitte ist als eine Anordnung von Permanentmagneten ausgebildet deren Pole in Drehrichtung mit abwechselnder Polarität nach außen zeigen. Der erste Läuferabschnitt ist drehfest mit einer Drehachse verbunden, der zweite Läuferabschnitt ist bezüglich des ersten Läuferabschnitts verdrehbar angeordnet. Zum Ändern des Drehversatzes der beiden Läuferabschnitte zueinander ist ein Mechanismus vorgesehen, der abhängig von der Drehzahl des Läufers wirksam ist. Der Verdrehmechanismus beruht auf einer zentrifugalkraftabhängigen Krafteinwirkung auf den zweiten Läuferabschnitt. Dazu sind im Rotorkern in diesem Läuferabschnitt in radialer Richtung kreisbogenförmige Nuten ausgebildet, in die bewegliche Hilfsachsen eingreifen. Die Hilfsachsen werden von einer Fixierplatte getragen, die an der Drehachse befestigt ist, und in der entsprechende kreisbogenförmige Schlitzlöcher ausgebildet sind. Auf der läuferabgewandten Seite der Fixierplatte sind die Enden der Hilfsachsen mit radialen bogenförmigen Gelenkstücken verbunden, die über eine Federanordnung zusammengehalten werden, so dass die Federn die Hilfsachsen in Position halten. Bei niedrigen Läuferdrehzahlen werden die Hilfsachsen in ihrer Ausgangsposition gehalten, bei zunehmend höheren Drehzahlen bewegen sich die Hilfsachsen durch die Zentrifugalkraft radial in den Schlitzen nach außen und bewirken ein Verdrehen des mit den Hilfsachsen und den Federn gekoppelten beweglichen zweiten Läuferabschnitts. Entsprechend der jeweiligen Relativstellung der Magnetpole der beiden Läuferabschnitte ändert sich der magnetische Fluss in die Statorwicklung des Motors. Bei niedrigen Drehzahlen sind die gleichen Polaritäten der Läuferabschnitte miteinander ausgerichtet, so dass die Flussstärke in den Polen des Stators maximal ist, bei zunehmenden Drehzahlen nimmt die Verdrehung des beweglichen Läuferabschnittes zu, so dass sich eine zunehmende Schwächung des Flusses ergibt. Dies bewirkt, dass der Motor nicht nur bei niedrigen Drehzahlen ein hohes Drehmoment hat - wie bei konventionellen Motoren - sondern auch bei hohen Drehzahlen mit einem relativ hohen Drehmoment und einem hohen Wirkungsgrad betrieben werden kann.

Nachteilig bei dem bekannten Motor wirkt sich aus, dass die Verdrehung des beweglichen zweiten Läuferabschnittes relativ zum ersten Läuferabschnitt an die Drehgeschwindigkeit der Läuferwelle gekoppelt ist. Die Verdrehung verläuft insbesondere proportional zur Umlaufgeschwindigkeit der Welle. Die absolute Größe der Verstellung ist über den Federmechanismus fest vorgegeben und kann nicht ohne größeren Aufwand geändert werden. Die Möglichkeiten der Schwächung des Flusses, bzw. der Feldstellung sind dadurch relativ unflexibel. Insbesondere sind die Möglichkeiten eine Feldschwächcharakteristik der Maschine entlang einer bestimmten Kennlinie zu realisieren begrenzt.

Aus der EP 1 237 259 A2 ist eine permanenterregte elektrische Maschine mit einem Rotor bekannt, der aus zwei Feldmagneten aufgebaut ist. Einer der beiden Feldmagnete ist relativ zum anderen der beiden Feldmagnete auf der Rotorachse axial versetzbar. Diese elektrische Maschine ist auf eine hohes Drehoment im niedrigen Drezahlbereich und auf eine hohe Ausgangsleistung im hohen Drehzahlbereich optimiert.

Aus der DE 34 01 163 C2 und der DE 38 00 916 A1 ist eine permanenterregte elektrische Maschine bekannt, bei der der Rotor aus einer Anordnung von Permanentmagneten besteht, wobei jeder Magnet mit einem lamellierten Weicheisenmantel umgeben ist, der aus abwechselnd magnetisch leitenden und nichtleitenden Schichten aufgebaut ist. Das in dem Luftspalt zwischen Rotor und Stator wirksame magnetische Feld verläuft im Rotor durch die lamellierte Weicheisenanordnung und bildet einen magnetischen Kreis. Die Feldstellung kann zum einen über den Ankerstrom erfolgen - mit den oben beschriebenen Nachteilen. In der DE 34 01 163 C2 wird für Anwendungen, bei denen keine schnelle Änderung des magnetischen Feldes notwendig ist, ein verschiebbares Weicheisenelement im Rotor vorgeschlagen, durch dessen Verschiebung der magnetische Kreis vergrößert und damit das Luftspaltfeld geschwächt wird. Dadurch ist eine Stellbarkeit des magnetischen Feldes erreichbar.

Nachteilig wirkt sich aus, dass die verschiebbaren Weicheisen-Stellelemente konstruktiv relativ aufwendig sind und nur für bestimmte Bauweisen anwendbar sind. Insbesondere bei einer rotierenden Maschine sind aufwendige konstruktive Maßnahmen zum Einbau und Antrieb der verschiebbaren Stellelemente nötig. Zudem sind die Feldschwächungsmöglichkeiten über die Weicheisen-Stellelemente begrenzt. Insbesondere für mit hohen Drehzahlen rotierende elektrische Maschinen mit einem möglichst weiten Feldstellbereich, wie sie im Kraftfahrzeugbereich gefordert werden, ist die bekannte Anordnung daher eher ungeeignet.

Weiterhin können aus dem Stand der Technik die Schriften FR 2 831 345 A1 und DE 22 31 590 A1 genannt werden, die jeweils permanenterregete Maschinen beschreiben. Beiden Schriften ist entnehmbar, dass der Läufer der elektrischen Maschine zweiteilig ausgeführt ist, wobei ein erster Teil des Läufers starr auf der Läuferachse befindlich ist und ein zweiter Teil des Läufers auf der Achse relativ zum ersten Läufer beweglich ist.

Aufgabe der vorliegenden Erfindung ist es daher, eine elektrische Maschine nach der Bauart der permanenterregten Synchronmaschinen zu schaffen, die einen breiten Feldstell-, bzw. Feldschwächebereich mit einer hohen Feldstellungseffizienz und einer verbesserten Feldschwächungsvariabilität verbindet, und die eine höhere Betriebssicherheit gewährleistet.

Diese Aufgabe wird durch eine elektrische Maschine mit den Merkmalen des Anspruchs 1 gelöst.

Gemäß der Erfindung sind die Läuferabschnitte auf Wellenabschnitten einer als Hohlwelle ausgebildeten Hauptwelle angeordnet, in der eine innere Welle axial verschiebbar gelagert ist. Das Stellmittel ist als ein Verschiebeelement für die axiale Verschiebung der inneren Welle ausgebildet, das in Wirkverbindung mit an den Wellen angeordneten ineinandergreifenden Führungsmitteln eine frei wählbare Verdrehung und Ausrichtung der Läuferabschnitte gegeneinander bewirkt.

Es sind beide Läuferabschnitte rotatorisch beweglich gegenüber der Hauptwelle gelagert und das Führungsmittel der axial verschiebbaren Welle weist einen Führungsabschnitt auf, welcher eine rotatorische Ausrichtung der axial verschiebbaren Welle gegenüber der Hauptwelle festlegt.

Erfindungsgemäß wird dabei eine permanenterregte Maschine vorgeschlagen, bei der die Feldstellung im Läufer selbst durch einen von außen ansteuerbaren Drehversatz von zwei oder mehr gegeneinander verdrehbaren Läuferabschnitten möglich ist. Die Erfindung ist sowohl auf Gleichstrommaschinen als auch auf Drehfeldmaschinen mit beliebiger Strang- und Polzahl vorteilhaft anwendbar. Ebenfalls hat die Verschaltung einzelner Spulen (Statorwicklungen) untereinander keine Auswirkung auf die erfindungsgemäße Funktion. Für die erfindungsgemäße Funktion der elektrischen Maschine ist es nicht von Belang, ob die Maschine als Innenläufer-, Außenläufer- oder Scheibenläufermotor ausgeführt ist. Der magnetische Rückschluss des Läuferkreises entspricht ebenfalls dem gebräuchlicher Maschinen. Weiterhin ist die Schrittweite der Statorwicklung für die Funktion nicht ausschlaggebend. Das Prinzip lässt sich sowohl mit Umfangswicklungen, gesehnten Wicklungen, konzentrierten Wicklungen, etc. anwenden. Insbesondere ist die Feldstellung im Läufer nicht an die Umlaufgeschwindigkeit des Läufers gekoppelt.

Der Drehversatz der Läuferabschnitte ist über die Stelleinrichtung frei einstellbar, d.h. er verändert sich auch im Feldstellbereich nicht zwangsläufig (proportional) mit der Drehzahl der Maschine, so dass eine Feineinstellung einer vorgegeben Feldschwächcharakteristik über den gesamten Drehzahlbereich der elektrischen Maschine möglich ist. Die momentane Drehzahl wird als Parameter für den momentanen Drehversatz herangezogen, die Drehversatzänderung mit der Drehzahl kann aber eine beliebig vorgebbare Funktion sein, die über eine entsprechende Ansteuerung der Stelleinrichtung und der Stellmittel realisiert wird.

Die folgenden Ausführungen beziehen sich wegen der einfacheren Darstellung auf zwei gegeneinander bewegliche Läuferabschnitte, können jedoch sinngemäß auch für eine Vielzahl gegeneinander beweglicher Abschnitte gelten.

Gemäß der Erfindung wird ausgenutzt, dass die durch den Läufer im Stator induzierte Spannung nicht von der maximalen Induktion der Maschine, sondern von der gesamten auf die Wicklung des Stator wirkenden Induktion abhängig ist. Bewegt sich also eine Leiterschleife (im folgenden als Spule bezeichnet) durch zwei gleich starke, jedoch entgegengesetzte magnetische Flüsse (die beispielsweise von zwei Permanentmagneten entgegengesetzter Polarisierung hervorgerufen werden), so ist die resultierende in der Spule messbare Spannung gleich Null (Superpositionsprinzip). Dabei ist es bezüglich der induzierten Spannung unerheblich, ob sich die Felder an jedem Ort aufheben oder ob abschnittsweise von Null verschiedene Felder existieren, welche sich letztlich in ihrer Gesamtheit aufheben. Das Integral des sich über dem Spulenquerschnitt zeitlich ändernden Flusses muss lediglich Null sein, um die Induktion einer Spannung in der Spule zu unterlassen.

Die innere Welle wird über eine geeignete Verstellhilfe, wie z.B. eine mechanische Führungsgabel oder über einen hydraulisch betätigten Kolben in axialer Richtung positioniert. Die Verstellung der Positionierung erfolgt dann beispielsweise über einen angesteuerten elektrischen Aktuator, bzw. über den Öldruck eines Fahrzeuggetriebes. Neben diesen sehr flexiblen, umlaufgeschwindigkeitsunabhängigen Verstellmöglichkeiten, ist ebenso ist eine Ansteuerung über einen Fliehkraftregler möglich, wodurch die Verstellung der Läuferabschnitte gegeneinander direkt der Umlaufgeschwindigkeit des Läufers bzw. der Hauptwelle folgt und ein äußerer Eingriff nicht nötig ist.

Die innere Welle ist abschnittsweise mit Führungsnuten versehen, in welche passende Führungselemente, bzw. Führungsnasen der äußeren Welle eingreifen. Die Führungsnuten in den Abschnitten für den starr mit der Welle verbundenen Läuferabschnitt und den rotatorisch beweglich mit der Welle verbundenen Läuferabschnitt können unterschiedliche Steigungen besitzen. Dabei ist es denkbar, dass die Führungsnuten eines der beiden Abschnitte axial verlaufend ausgebildet und die Führungsnuten des anderen Abschnittes schraubenförmig verlaufend ausgebildet sind.

Nach einer weiteren bevorzugten Ausführungsform der Erfindung weisen beide Abschnitte gegenläufige Steigungen auf. Bei dieser Anordnung heben sich die während der Verstellung der Läuferabschnitte auftretenden Drehzahlveränderungen der einzelnen Läuferabschnitte auf, so dass sich ein energetisch und regelungstechnisch vorteilhaftes Verhalten der Gesamtanordnung ergibt.

Gemäß einer weiteren bevorzugten Ausführungsform der Erfindung überlagern sich die (beiden) verschieden ausgeprägten Führungsnuten. Dabei ist zu berücksichtigen, dass die kreuzungsfreie Länge der Führungsnuten hinreichend größer als die Breite der Führungsnuten ist, um ein Verklemmen der Führungselemente (Führungsnasen) bzw. einen Wechsel der Führungsspur auszuschließen. Durch die Überlagerung der Führungsnuten lässt sich eine besonders kompakte Anordnung für die Verstellung erreichen.

Nach einer weiteren bevorzugten Ausführungsform der Erfindung sind die (beiden) Läuferabschnitte mit Federn derart gegeneinander abgestützt, dass die rotatorischen Kräfte, die aus den direkt und den über Vermittelung des Statorkreises zwischen den (beiden) Läuferabschnitten ausgebildeten magnetischen Feldlinien resultieren, kompensiert werden. Dadurch lässt sich die Verstellung der Läuferabschnitte gegeneinander mit geringem Aufwand an Kraft und Energie durchführen.

Die Kraft der abstützenden Federn kann ausreichend geringer bemessen als die resultierenden zwischen den Läuferabschnitten rotatorisch wirkenden magnetischen Kräfte sein. Dadurch wird bewirkt, dass die relative Stellung der Läuferabschnitte zueinander bei maximaler Feldschwächung eine Vorzugslage besitzt und bei fehlender Ansteuerung sich die Maschine selbsttätig entregt. Dadurch wird erreicht, dass die Maschine im Fehlerfall kein nennenswertes Moment mehr aufbringen kann. Es ist auch möglich, dass die Kraft der abstützenden Federn ausreichend größer bemessen ist als die resultierenden zwischen den Läuferabschnitten rotatorisch wirkenden magnetischen Kräfte. Dadurch wird bewirkt, dass die relative Stellung der Läuferabschnitte zueinander bei minimaler Feldschwächung eine Vorzugslage besitzt und bei fehlender Ansteuerung sich die Maschine selbsttätig in den Zustand maximaler Erregung begibt. Dadurch wird erreicht, dass die Maschine im Fehlerfall ihr maximales Moment aufbringen kann.

Ebenso ist es denkbar, die Kraft der Federn derart zu bemessen, dass sich eine mittlere Auslenkung der beiden Läuferabschnitte und somit eine mittlere Feldschwächung einstellt. Schließlich ist es auch möglich, die Vorzugslage über axial auf die axial verschiebbare Welle wirkende Federn einzustellen. Auch hierbei lassen sich die beschriebenen Arbeitspunkte als Vorzugslagen definieren.

Nach einer weiteren bevorzugten Ausführungsform der Erfindung ist die Steigung der Führungsnuten innerhalb eines Abschnittes nicht konstant, wodurch beispielsweise die zur Verstellung benötigte Kraft und der Verstellweg nach energetischen und regelungstechnischen Maßgaben optimierbar sind. Insbesondere kann die Steigung mit zunehmendem Versatz der Läuferabschnitte gegeneinander in einem bestimmten Verhältnis abnehmen. Der Verlauf der Steigung wird dabei nach der Auslegung der Maschine und entsprechend der verfügbaren Momenten im Drehzahlbereich vorgenommen. Durch die variable Steigung lässt sich die für die Verstellung notwendige Kraft für den gesamten Arbeitsbereich der Elektromaschine minimieren.

In Verbindung mit der gegenläufigen Steigung für die beiden Läuferabschnitte heben sich gegenüber der Hauptwelle auch die für die Verstellung der Läuferabschnitte aufzubringenden Momenten auf, wodurch sich das regelungstechnische Verhalten der Anordnung nochmals verbessert.

Bei der erfindungsgemäßen elektrische Maschine werden die Dauermagnete (Permanentmagnete) des Läufers auf mindestens zwei gegeneinander verdrehbaren Läuferabschnitten angebracht. Durch Verdrehen der Läuferabschnitte verändert sich das resultierende Feld. Dadurch wird insbesondere eine regulierbare Feldschwächung ermöglicht. Die bekannten Nachteile der herkömmlichen permanenterregten Synchronmaschinen bezüglich des Feldstellbereichs und der Kontrolle des Momentes bei schweren Fehlern in der Ansteuerung werden vermieden. Die erfindungsgemäße Maschine vereinigt somit die jeweiligen Vorteile der elektrisch erregten Maschinen (z.B. Klauenpolmaschine, Asynchronmaschine) bzgl. der Feldstellbarkeit und der Ausnutzung des Eisenkreises mit denen der permanenterregten Maschinen bzgl. ihrer relativ einfachen und kostengünstigen Bauweise und ihres hohen Wirkungsgrades. Im Vergleich zur starren Kopplung des Drehversatzes der Läuferabschnitte an die Maschinendrehzahl, erlaubt die freie Feldstellung im Läufer flexiblere Möglichkeiten für den Betrieb der elektrischen Maschine.

Im Detail ergeben sich folgende Vorteile: Der Feldstellbereich kann wesentlich weiter über der Drehzahl gespreizt werden. Die Feldschwächung erfolgt dabei verlustlos, da diese nicht über den Ständer eingeprägt werden muss. Mit der Feldstellung ist keine Verschlechterung des Phasenwinkels verbunden, woraus ein geringerer Blindleistungsbedarf der Maschine resultiert. Die Steuerung der Maschine muss nicht mehr auf einen Blindleistungsbedarf bei der Feldstellung, sondern nur noch auf den maximalen Wirkleistungsbedarf ausgelegt werden. Daraus ergeben sich Bauraum- und Kostenvorteile. Im Falle generatorischen Betriebes kann mit der erfindungsgemäßen Art der Feldstellung ein einfacher Betrieb mit drehzahlunabhängiger konstanter Maschinenspannung gewährleistet werden. Dadurch eignet sich die Maschine insbesondere für die Verwendung in Fahrzeugen, bei welchen über einen weiten Drehzahlbereich des Verbrennungsmotor eine nahezu gleichbleibende generatorische Speisung des Bordnetzes des Fahrzeugs gefordert wird. Es lassen sich gut regelbare, rastmomentenfreie Maschinen ohne Einschränkungen bezüglich Wirkungsgrad und erreichbarem maximalen Moment realisieren.

Im Leerlauf der Maschine kann das Feld auf Null eingestellt werden, so dass die Maschine bei beliebigen Drehzahlen nahezu verlustlos arbeiten kann. Bei Ansteuerfehlern kann die Erregung in kurzer Zeit (Millisekunden) auf Null vermindert werden, wodurch das von der Maschine aufgebrachte Moment ebenfalls Null wird. Dadurch eignet sich die erfindungsgemäße Maschine besonders für eine starre Kopplung mit dem Antriebsstrang. Die gefürchteten Kurzschlussmomente und deren Auswirkung auf die Fahrzeugstabilität werden durch die erfindungsgemäße Anordnung vermieden. Das Erregerfeld muss nicht über elektrische Pfade erzeugt werden, im Gegensatz zu elektrisch erregten Maschinen ist keine Erregerleistung bereitzustellen. Dadurch werden die Aufwendungen für die Erregung (Energieversorgung und Schaltung zur Bereitstellung der Erregerleistung) geringer. Der Blindleistungsbedarf ist geringer. Daraus ergibt sich eine günstigere Belastungskennlinie (besserer "cos ϕ"). Ebenso sind der Wirkungsgrad wie auch die erzielbare Leistungsdichte höher. Die Ausnutzung des Eisenkreises ist höher. Der erzielbare Wirkungsgrad und die erzielbare Leistungsdichte sind höher. Das Gewicht und das Volumen sind geringer als bei anderen elektrischen Maschinen gleicher Funktionalität und Leistungsfähigkeit. Die Kosten für einen speisenden Umrichter sind wegen des optimierten Betriebes geringer als bei anderen elektrischen Maschinen gleicher Funktionalität und Leistungsfähigkeit.

Gemäß einer weiteren bevorzugten Ausführungsform der Erfindung wird der Läufer in mehr als zwei Abschnitte unterteilt. Insbesondere lassen sich folgende zwei Varianten vorteilhaft umsetzen:
Die einzelnen Abschnitte können gegeneinander mit unterschiedlichem Versatz verstellt werden. Dadurch kann zum einen eine Festlegung der Feldschwächcharakteristik der Maschine auf eine bestimmte Kennlinie besonders effektiv realisiert werden. Weiterhin kann eine "Schrägung" des Läufers variiert werden, um Rastmomente und Momentenwelligkeit auf einen spezifischen Arbeitspunkt der Maschine anzupassen. Dadurch ist es beispielsweise möglich, bei stehendem Läufer ein hohes Rastmoment vorzuhalten, um beispielsweise eine Brems- oder Kupplungsfunktion bei stromloser Maschine zu realisieren (der Versatz der Magnete, d.h. die Schrägung des Läufers ist Null). Durch zunehmenden Versatz der Magnete / zunehmende Schrägung des Läufers wird das Rastmoment herabgesetzt und aufgehoben, wodurch die Bremse / Kupplung gelöst wird. Dieses Verfahren ist ebenfalls anwendbar, um das Regelungsverhalten der Maschine bei kleinen Momenten zu verbessern ohne das Maximalmoment der Maschine durch eine feste Schrägung zu beeinträchtigen.

Es ist auch möglich, dass jeder zweite Abschnitt miteinander mechanisch starr verbunden ist, so dass sich zwei kammartig ineinandergreifende Läuferteile ergeben. Bei genügend feiner Teilung des Läufers wird durch Versatz der Läuferabschnitte nicht nur das gesamte auf die Ständerspulen wirksame Feld, sondern wegen überproportional zunehmender Randeffekte (Schluss des Flusses zwischen den Magneten bereits im Luftspalt) auch das örtlich wirksame Feld geschwächt. Dadurch werden die Eisenverluste, d.h. der zusätzliche Energieaufwand für das Magnetfeld zur Überbrückung des Luftspaltes zwischen Stator und Rotor in Form von erhöhtem Erregerstrom, Ummagnetisierungs- und Wirbelstromverlusten, im Ständer weiter reduziert.

Nach einer weiteren bevorzugten Ausführungsform der Erfindung sind die Läuferabschnitte als ineinandergreifende Glocken ausgebildet. Dabei weist der innere Läuferabschnitt einen magnetischen Rückschluss auf, während dieser bei dem äußeren Läuferabschnitt vermieden wird. Der äußere Läuferabschnitt kann als eine selbsttragende magnetische Glocke mit wechselnder Magnetisierung ausgebildet sein. Um die rückschlussfreie Konstruktion zu realisieren, können als Träger für die einzelnen Permanentmagnete unmagnetische Materialien wie beispielsweise Kunststoffe oder Aluminium verwendet werden. Bei der Verwendung magnetischer Trägermaterialien ist eine Dimensionierung denkbar, die eine Sättigung evtl. auftretender magnetischer Kurzschlüsse bewirkt. Dazu sind geeignete Materialien, bzw. Dimensionierungsrichtlinien für sättigende magnetische Stege an sich aus der Konstruktion von elektrischen Maschinen bekannt. Die erfindungsgemäße Glockenanordnung führt zu einer örtlichen Kompensation des Magnetfeldes und hat dadurch den Vorteil einer nochmals weitergehenden Verringerung der Eisenverluste im Feldstellbereich. Grundsätzlich ist auch eine Glockenanordnung mit mehr als zwei ineinandergreifenden Läuferabschnitten denkbar.

Die bekannten Verfahren zur Feld- und Ankerstellung von permanenterregten elektrischen Maschinen haben die oben beschriebenen Nachteile.

Weitere Aufgabe der vorliegenden Erfindung ist es daher, ein Verfahren anzugeben, bei dem insbesondere die Feldstellung einer permanenterregten Synchronmaschine effizienter ist.

Diese Aufgabe wird durch eine Verfahren mit den Merkmalen des Anspruchs 15 gelöst.

Durch die frei variierbare Feldstellung, bzw. Feldschwächung im Läufer selbst, wird ein effizienterer und sicherer Betrieb der permanenterregten Synchronmaschine in einem weiten Drehzahlbereich erzielt. Durch eine Feineinstellung des Drehversatzes ist die Maschine im Betrieb besonders energiesparend und leistungsverlustarm in einem weiten Drehzahlbereich, wie er in Kraftfahrzeugen gefordert wird.

Beim Betrieb der Maschine im Ankerstellbereich werden die Läuferabschnitte vorzugsweise gleichphasig ausgerichtet, d.h. die Polarität nebeneinanderliegender, bzw. gegenüberliegender Magnete ist identisch und der Drehversatz zueinander ist Null. Dadurch kann die Maschine mit maximaler Erregung betrieben werden. Im Feldstellbereich werden die Läuferabschnitte gegeneinander verdreht, so dass die Magnete zueinander versetzt werden und sich die Polaritäten überlappen. Das resultierende Feld wird dadurch geschwächt, die im Ständer induzierte Spannung ist entsprechend kleiner. Die Maschine kann dadurch wie bei von außen eingeprägter Feldschwächung, bei Drehzahlen oberhalb der sogenannten Eckdrehzahl betrieben werden, das verfügbare Moment wird entsprechend reduziert.

Bei einem Versatz der (beiden) Läuferabschnitte um genau eine Polteilung (gegenphasige Ausrichtung) ist das resultierende Feld Null, ebenso die resultierende im Ständer induzierte Spannung und das von der Elektromaschine aufgebrachte Moment. Bei einem schwerem Steuerungsfehler kann auf diese Weise ein unkontrolliertes Moment vermieden werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: Eine vereinfachte Darstellung einer elektrischen Maschine mit zwei gegeneinander verdrehbaren Läuferabschnitten in einer Seitenansicht im Schnitt,
- Figur 2a:: eine schematische Darstellung einer Drehausrichtung der beiden Läuferabschnitte bei einer maximaler Erregung in einer Seitenansicht im Schnitt,
- Figur 2b:: eine schematische Darstellung einer Drehausrichtung der beiden Läuferabschnitte bei einer maximalen Feldschwächung,
- Figur 3a:: eine schematische Darstellung einer Drehausrichtung bei einem Läufer mit mehr als zwei Läuferabschnitten bei maximaler Erregung,
- Figur 3b:: eine schematische Darstellung einer Drehausrichtung der mehr als zwei Läuferabschnitte bei resultierender maximaler Feldschwächung,
- Figur 3c:: eine schematische Darstellung einer alternativen Drehausrichtung der mehr als zwei Läuferabschnitte bei resultierender maximaler Feldschwächung,
- Figur 4:: eine vereinfachte Darstellung einer elektrischen Maschine mit zwei ineinandergreifenden, gegeneinander verdrehbaren Läuferabschnitten in einer Seitenansicht im Schnitt,
- Figur 5a:: eine schematische Darstellung einer Drehausrichtung der ineinandergreifenden Läuferabschnitte bei maximaler Erregung in einer Vorderansicht im Schnitt und
- Figur 5b:: eine schematische Darstellung einer Drehausrichtung der ineinandergreifenden Läuferabschnitte bei maximaler Feldschwächung.

Eine elektrische Maschine besteht im Wesentlichen aus einem Stator 1 und einem Läufer 2, der in mehrere gegeneinander verdrehbare Läuferabschnitte 3a-n unterteilt ist.

Die elektrische Maschine ist als eine permanenterregte Synchronmaschine, beispielsweise in Innenpolbauweise (Innenläufermaschine), ausgebildet. Der Aufbau und die Funktionsweise derartiger permanenterregter Synchronmaschinen ist im Prinzip bekannt. Daher wird im Folgenden nur auf den erfindungsgemäßen Läufer 2 im Detail eingegangen.

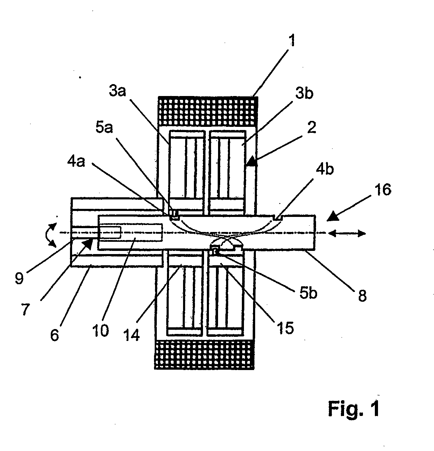

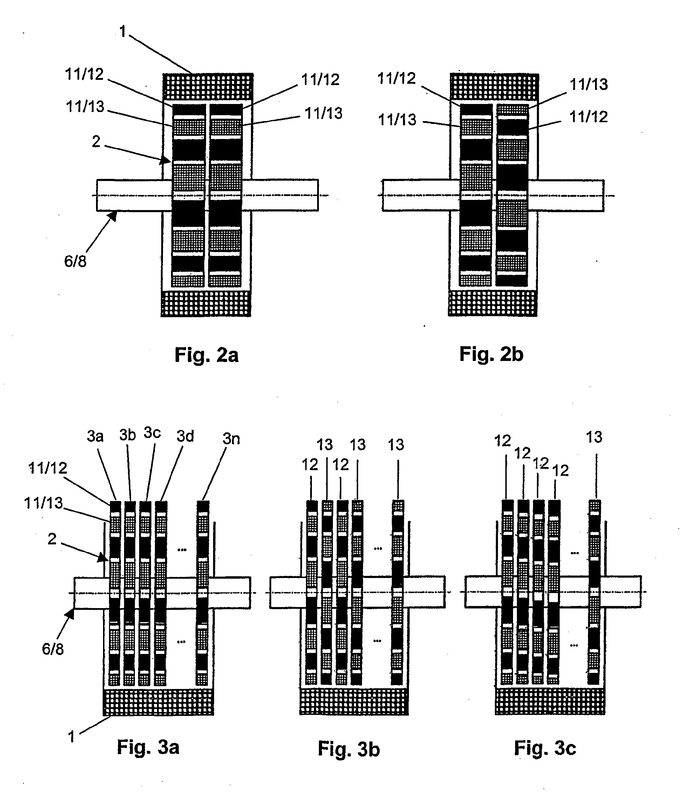

Fig. 1 zeigt den Läufer 2 mit zwei nebeneinander angeordneten Läuferabschnitten 3a und 3b. Der Läufer 2 ist durch einen Luftspalt beabstandet zu dem Stator 1, drehbar auf einer Hauptwelle 6 gelagert. Der Stator 1 ist in bekannte Weise mit Spulen und Elektroblechen aufgebaut. Die Läuferabschnitte 3a, 3b sind als Polräder ausgebildet, die jeweils eine Anordnung von Permanentmagneten 11 tragen, wobei die magnetischen Nordpole 12 und Südpole 13 abwechselnd nach außen zeigen (Fig. 2). Die Hauptwelle 6 ist als eine Hohlwelle ausgebildet, in die eine innere Welle 8 hineinragt. Die Welle 8 ist gegenüber der Welle 6 axial verschiebbar. Ein Führungsstift 9 an der Hauptwelle 6 und eine Bohrung 10 an der inneren Welle 8 fungieren dabei als eine Führungshilfe 7. Zur Verstellung der Läuferabschnitte 3a, 3b, bzw. 3a-n gegeneinander ist eine Stelleinrichtung 16 vorgesehen. Die Stelleinrichtung 16 weist zur axialen Verschiebung der Welle 8 ein (nicht dargestelltes) Stellmittel, beispielsweise einen ansteuerbaren elektrischer Aktuator auf. Der Aktuator setzt eine Verschiebung der Welle 8 um einen Verschiebeweg um, der über eine (nicht dargestellte) Ansteuereinheit vorwählbar ist. Die Läuferabschnitte 3a und 3b sind auf Wellenabschnitten 14, 15 der Hauptwelle 6 gegeneinander verdrehbar angeordnet. An den Wellenabschnitten 14, 15 sind Führungselemente / Führungsnasen 5a, 5b ausgebildet, die in schraubenförmig verlaufende Führungsnuten 4a, 4b an der inneren Welle 8 greifen. Eine axiale Verschiebung der inneren Welle 8 bewirkt über die Führungsnuten 4a, 4b und die Führungsnasen 5a, 5b ein gegeneinander Verdrehen der Läuferabschnitte 3a, 3b. Über den axialen Verschiebeweg der inneren Welle 8 ist ein beliebiger Drehversatz bzgl. der Pole 12, 13 der Läuferabschnitte 3a, 3b einstellbar. Weiterhin sind vorteilhaft (nicht dargestellte) Federn zwischen den Läuferabschnitten 3a, 3b vorgesehen, die eine Vorzugslage der Läuferabschnitte 3a, 3b festlegen.

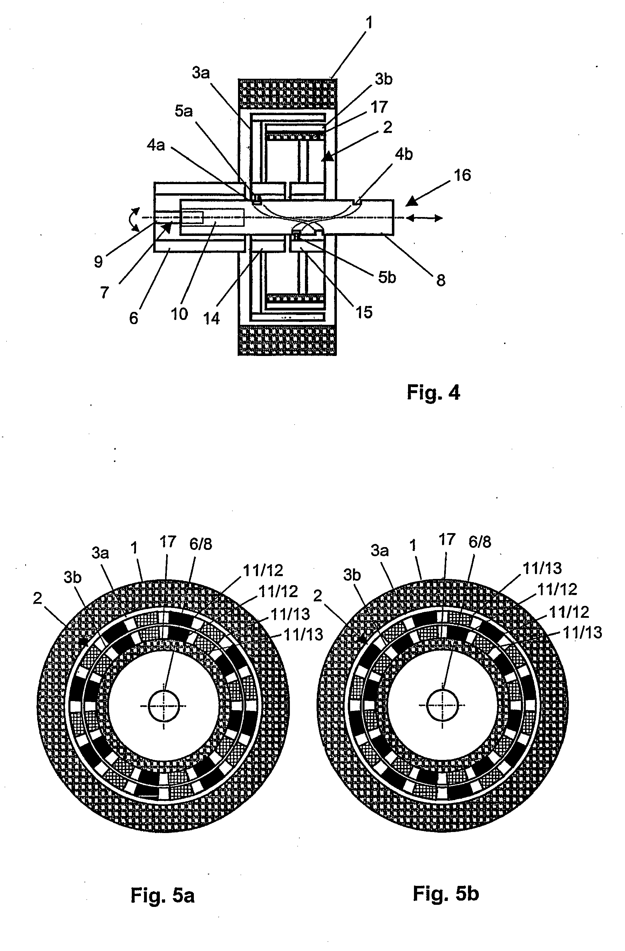

Eine weitere Ausführungsform des Läufers 2 ist in den Figuren 4 und 5 dargestellt. Die Läuferabschnitte 3a, 3b sind als ineinandergreifende Glocken angeordnet (Lager, krafteinleitende Elemente und Federn zwischen den Läuferabschnitten sind ebenso wie bei Fig. 1 nicht eingezeichnet). Der äußere Läuferabschnitt 3a ist als eine selbsttragende Glocke ohne magnetischen Rückschluss ausgebildet. Der innere Läuferabschnitt 3b weist an seinem Innenumfang einen magnetischen Rückschluss 17 auf. Im Übrigen entspricht die Funktionsweise derjenigen von nebeneinanderangeordneten Läuferabschnitten.

Ein Verfahren zur Feld- und Ankerstellung einer permanenterregten elektrischen Maschine beruht im Wesentlichen auf einer Drehausrichtung von Magnetpolen 12, 13 von gegeneinander verdrehbar angeordneten Läuferabschnitten 3a-n eines Läufers 2 der Maschine.

Im Folgenden wird das Verfahren an der oben beschrieben erfindungsgemäßen elektrischen Maschine, für den Fall eines an den Antriebsstrang eines Kraftfahrzeuges gekoppelten Elektromotors / Generators mit einem weiten Drehzahlbereich erläutert.

Die Feld-, bzw. Ankerstellung entlang einer Drehmoment/Drehzahl-Kennlinie erfolgt erfindungsgemäß durch die Variation des Drehversatzes zwischen den Läuferabschnitten 3a, 3b (Läufer mit zwei Läuferabschnitten). Im Grunddrehzahlbereich (Ankerstellbereich) soll die Maschine mit maximaler Erregung betrieben werden. Dabei steigt die elektrische Leistung bei maximalem Antriebsmoment (Nennmoment) etwa linear an. Dazu werden die Läuferabschnitte 3a, 3b gleichphasig ausgerichtet, d.h. die Polarität nebeneinanderliegender Magneten 11 ist identisch (Nordpol 12 liegt neben Nordpol 12, Südpol 13 liegt neben Südpol 13) und der Drehversatz zueinander ist Null (Fig. 2a). Um die Maschine bei Drehzahlen oberhalb des Ankerstellbereichs, d.h. im Feldstellbereich (Feldschwächbereich) betreiben zu können, ist eine Schwächung des magnetischen Luftspaltfeldes (Feldstellung / Feldschwächung), d.h. eine Verringerung der Erregung erforderlich. Dabei bleibt die elektrische Leistung bei abfallendem Antriebsmoment annähernd maximal. Dazu werden die beiden Läuferabschnitte 3a, 3b gegeneinander verdreht, so dass die Magnete zu einander versetzt werden. Das resultierende Feld wird bei verringerter Spannungsinduktion im Stator 1 kleiner. Ein maximale Feldschwächung ergibt sich bei gegenphasiger Ausrichtung (Nordpol 12 liegt neben Südpol 13) der Läuferabschnitte 3a+b (Fig. 2b). Durch einen zwischen der gleich- und gegenphasigen Ausrichtung liegenden Drehversatz lässt sich die Feldschwächung bzw. Feldstellung variieren.

Bei einer Läuferteilung mit mehr als zwei Läuferabschnitten (Fig. 3a-c) werden die einzelnen Läuferabschnitte 3a-n für eine maximale Erregung ohne Drehversatz ausgerichtet. Zur Feldstellung können die Läuferabschnitte 3a-n mit verschiedenem Drehversatz gegeneinander ausgerichtet werden. Eine maximale Feldschwächung ergibt sich hierbei durch eine wechselweise Ausrichtung (Norpol-Südpol-Nordpol...) (Fig. 3b) oder durch einen zunehmenden Versatz (Nordpol-Nordpol mit Drehversatz-...-Südpol) der einzelnen Läuferabschnitte 3a-n (Fig. 3c). Durch einen bestimmten Drehversatz für jeden einzelnen Läuferabschnitt 3a-n ist es möglich, ein bestimmte Feldschwächungs-Kennlinie zu erzielen.

Im Falle einer Glockenanordnung wie sie in Fig. 4, bzw. 5 dargestellt ist, liegen sich die Magnetpole 12, bzw. 13 des äußeren Läuferabschnittes 3a und des inneren Läuferabschnitts 3b gegenüber. Bei maximaler Erregung (Ankerstellbereich) stehen sich die gleichen Polaritäten gegenüber (Fig. 5a). Bei einem Drehversatz überlappen sich die gegenüberliegenden Pole zunehmend (Feldstellbereich), bis sich die entgegengesetzten Polaritäten gegenüberstehen (Fig. 5b). Diese Einstellung erzeugt wiederum eine maximale Feldschwächung.

### Bezugszeichenliste

- 1: Stator
- 2: Läufer
- 3a: Läuferabschnitt
- 3b: Läuferabschnitt
- 3c: Läuferabschnitt
- 3d: Läuferabschnitt
- 3n: Läuferabschnitt
- 4a: Führungsnut
- 4b: Führungsnut
- 5a: Führungsnase
- 5b: Führungsnase
- 6: Hauptwelle
- 7: Führung
- 8: innere Welle
- 9: Führungsstift
- 10: Bohrung
- 11: Magnet
- 12: Magnet-Nordpol
- 13: Magnet-Südpol
- 14: Wellenabschnitt
- 15: Wellenabschnitt
- 16: Stelleinrichtung
- 17: Magnetischer Rückschluss

## Patentansprüche

1. Elektrische Maschine, mit einem Stator (1) der eine Wicklung trägt, und mit einem durch einen Luftspalt zu dem Stator beabstandet angeordneten drehbaren Läufer (2), der im Wesentlichen aus wenigstens zwei koaxialen, gegeneinander verdrehbaren Läuferabschnitten (3a, 3b) besteht, bei dem jeder Läuferabschnitt eine Anordnung von Permanentmagneten mit alternierend radial nach außen zeigenden Polaritäten trägt, und mit einer Stelleinrichtung (16) zum Verdrehen der Läuferabschnitte (3a, 3b) gegeneinander,
**dadurch gekennzeichnet,**
**dass** die Stelleinrichtung (16) ansteuerbare Stellmittel aufweist, über die die Läuferabschnitte (3a, 3b) mit einem von einer Umlaufgeschwindigkeit des Läufers (2) unabhängigen, variierbaren Drehversatz zueinander ausrichtbar sind,
**dass** die Läuferabschnitte (3a, 3b) auf Wellenabschnitten (14, 15) einer als Hohlwelle ausgebildeten Hauptwelle (6) angeordnet sind, in der eine innere Welle (8) axial verschiebbar gelagert ist,
**dass** beide Läuferabschnitte (3a, 3b) gegenüber der Hauptwelle (6) drehbar gelagert sind, und dass die innere Welle (8) einen Führungsabschnitt aufweist, über den eine rotatorische Ausrichtung der axial verschiebbaren inneren Welle (8) gegenüber der äußeren Hauptwelle (6) festlegbar ist.

2. Elektrische Maschine nach Anspruch 1,
**dadurch gekennzeichnet,**
**dass** das Stellmittel als ein Verschiebeelement für die axiale Verschiebung der inneren Welle (8) ausgebildet ist, das in Wirkverbindung mit an den Wellen (6, 8) angeordneten ineinandergreifenden Führungsmitteln (4a, 4b, 5a, 5b) eine frei wählbare Verdrehung und Ausrichtung der Läuferabschnitte (3a, 3b) gegeneinander bewirkt.

3. Elektrische Maschine nach Anspruch 1 oder 2,
**dadurch gekennzeichnet,**
**dass** der Läufer (2) mehr als zwei gegeneinander verdrehbare Läuferabschnitte (3a, 3b, 3c, 3d,...3n) aufweist.

4. Elektrische Maschine nach Anspruch 1,
**dadurch gekennzeichnet,**
**dass** jeder zweite Läuferabschnitt (3a, 3c,...) starr miteinander verbunden ist.

5. Elektrische Maschine nach einem der Ansprüche 1 bis 4,
**dadurch gekennzeichnet,**
**dass** das Stellmittel als ein über den Öldruck eines Kraftfahrzeuggetriebes betätigbarer hydraulischer Kolben ausgebildet ist.

6. Elektrische Maschine nach einem der Ansprüche 1 bis 5,
**dadurch gekennzeichnet,**
**dass** das Stellmittel als ein elektrischer Aktuator ausgebildet ist, der auf eine an der inneren Welle (8) angeordnete Verstellhilfe wirksam ist.

7. Elektrische Maschine nach einem der Ansprüche 1 bis 6,
**dadurch gekennzeichnet,**
**dass** das Stellmittel über einen der Umlaufgeschwindigkeit der Hauptwelle (6) des Läufers (2) folgenden Fliehkraftregler ansteuerbar ist.

8. Elektrische Maschine nach einem der Ansprüche 1 bis 7,
**dadurch gekennzeichnet,**
**dass** die Führungsmittel an der inneren Welle (8) als axial und/oder schraubenförmig verlaufende Führungsnuten (4a, 4b) ausgebildet sind, und dass die Führungsmittel an der Hauptwelle (6) als in die Führungsnuten (4a, 4b) passend eingreifende Führungsnasen (5a, 5b) ausgebildet sind.

9. Elektrische Maschine nach Anspruch 8,
**dadurch gekennzeichnet,**
**dass** die Führungsnuten (4a, 4b) abschnittsweise unterschiedliche Steigungen aufweisen.

10. Elektrische Maschine nach Anspruch 8 oder 9,
**dadurch gekennzeichnet,**
**dass** die Steigungen der Führungsnuten (4a, 4b) abschnittsweise gegenläufig verlaufen.

11. Elektrische Maschine nach einem der Ansprüche 9 bis 10,
**dadurch gekennzeichnet,**
**dass** der Grad der Steigung der Führungsnuten (4a, 4b) innerhalb eines Wellenabschnitts der inneren Welle (8) veränderlich ist.

12. Elektrische Maschine nach einem der Ansprüche 8 bis 11,
**dadurch gekennzeichnet,**
**dass** sich die in Steigung und/oder Verlauf unterschiedlich ausgeprägten Führungsnuten (4a, 4b) überlagern.

13. Elektrische Maschine nach einem der Ansprüche 1 bis 12,
**dadurch gekennzeichnet,**
**dass** der Läufer (2) Federelemente aufweist, die die einzelnen Läuferabschnitte (3a-n) gegeneinander abstützen, und dass durch eine Anpassung der Federkraft der Federelemente an die im Betrieb zwischen den Läuferabschnitten (3a-n) auftretenden, rotatorisch wirkenden magnetischen Kräfte, eine Vorzugslage der Drehstellung der Läuferabschnitte (3a-n) einstellbar ist.

14. Elektrische Maschine nach einem der Ansprüche 1 bis 13,
**dadurch gekennzeichnet,**
**dass** die Läuferabschnitte (3a, 3b) als ineinandergreifende Glocken ausgebildet sind.

15. Verfahren zur Feld- und Ankerstellung einer permanenterregten elektrischen Maschine, insbesondere für Kraftfahrzeuge, deren Drehzahlbereich in einen Ankerstellbereich und in einen Feldstellbereich unterteilt ist, mit einem Läufer (2) der wenigstens zwei gegeneinander verdrehbare Läuferabschnitte (3a, 3b) gemäß Anspruch 1 aufweist, die jeweils eine Anordnung von mit alternierenden Polaritäten radial nach außen zeigenden Permanentmagneten aufweisen,
**dadurch gekennzeichnet,**
**dass** über ansteuerbare Stellmittel ein Drehversatz der Läuferabschnitte (3a-n) derart variiert wird, dass einer jeweiligen Drehzahl des Läufers (2) eine frei vorgewählte Feldschwächung zugeordnet wird und
**dass** die Läuferabschnitte (3a-n) im Ankerstellbereich ohne einen Drehversatz ausgerichtet werden, und dass im Feldstellbereich die Läuferabschnitte (3a-n) mit einem Drehversatz ausgerichtet werden, der einer Kennlinie einer vorgegebenen Feldschwächcharakteristik folgt.

## Claims

1. An electrical machine, having a stator (1) which bears a winding, and with a rotatable rotor (2) arranged spaced apart from the stator by an air gap, the rotor substantially consisting of at least two coaxial rotor portions (3a, 3b) that can be rotated relative to one another, in which each rotor portion bears an arrangement of permanent magnets with alternately radially outwardly pointing polarities, and with a setting device (16) for rotating the rotor portions (3a, 3b) relative to one another, **characterised in that** the setting device (16) has activatable setting means, by means of which the rotor portions (3a, 3b) can be aligned with one another with a variable rotary offset, which is independent of a rotational speed of the rotor (2), **in that** the rotor portions (3a, 3b) are arranged on shaft portions (14, 15) of a main shaft (6) configured as a hollow shaft, in which an inner shaft (8) is axially displaceably mounted, **in that** the two rotor portions (3a, 3b) are rotatably mounted in relation to the main shaft (6), and **in that** the inner shaft (8) has a guide portion, by means of which a rotary alignment of the axially displaceable inner shaft (8) relative to the outer main shaft (6) can be fixed.

2. An electrical machine according to claim 1, **characterised in that** the setting means is configured as a displacement element for the axial displacement of the inner shaft (8), said displacement element in operative connection with mutually interlocking guide means (4a, 4b, 5a, 5b) arranged on the shafts (6, 8) bringing about a freely selectable rotation and alignment of the rotor portions (3a, 3b) relative to one another.

3. An electrical machine according to claim 1 or 2, **characterised in that** the rotor (2) has more than two rotor portions (3a, 3b, 3c, 3d, ... 3n) that can be rotated relative to one another.

4. An electrical machine according to claim 1, **characterised in that** each second rotor portion (3a, 3c, ...) is rigidly connected to one another.

5. An electrical machine according to any one of claims 1 to 4, **characterised in that** the setting means is configured as a hydraulic piston that can be actuated by means of the oil pressure of a motor vehicle transmission.

6. An electrical machine according to any one of claims 1 to 5, **characterised in that** the setting means is configured as an electrical actuator, which acts on an adjusting aid arranged on the inner shaft (8).

7. An electrical machine according to any one of claims 1 to 6, **characterised in that** the setting means can be activated by means of a centrifugal force regulator following the rotational speed of the main shaft (6) of the rotor (2).

8. An electrical machine according to any one of claims 1 to 7, **characterised in that** the guide means on the inner shaft (8) are configured as guide grooves (4a, 4b) running axially and/or helically, and **in that** the guide means on the main shaft (6) are configured as guide lugs (5a, 5b) fittingly engaging in the guide grooves (4a, 4b).

9. An electrical machine according to claim 8, **characterised in that** the guide grooves (4a, 4b), in portions, have different slopes.

10. An electrical machine according to claim 8 or 9, **characterised in that** the slopes of the guide grooves (4a, 4b) run in opposite directions, in portions.

11. An electrical machine according to either of claims 9 or 10, **characterised in that** the degree of the slope of the guide grooves (4a, 4b) is variable within a shaft portion of the inner shaft (8).

12. An electrical machine according to any one of claims 8 to 11, **characterised in that** the guide grooves (4a, 4b) differently designed with respect to slope and/or course overlap one another.

13. An electrical machine according to any one of claims 1 to 12, **characterised in that** the rotor (2) has spring elements, which support the individual rotor portions (3a-n) relative to one another, and **in that** a preferred location of the rotational position of the rotor portions (3a-n) can be adjusted by an adaptation of the spring force of the spring elements to the rotationally acting magnetic forces that occur during operation between the rotor portions (3a-n).

14. An electrical machine according to any one of claims 1 to 13, **characterised in that** the rotor portions (3a, 3b) are configured as mutually interlocking cups.

15. A method for setting the field and armature of a permanently energised electrical machine, more especially for motor vehicles, the rotational speed range of which is divided into an armature setting range and a field setting range, with a rotor (2), which has at least two rotor portions (3a, 3b) that can be rotated relative to one another according to claim 1, which in each case have an arrangement of permanent magnets pointing radially outwardly with alternating polarities, **characterised in that** a rotary offset of the rotor portions (3a-n) is varied by means of activatable setting means in such a way that a freely preselected field suppression is associated with a respective rotational speed of the rotor (2) and **in that** the rotor portions (3a-n) in the armature setting range are aligned without a rotary offset, and **in that** in the field setting range the rotor portions (3a-n) are aligned with a rotary offset, which follows a characteristic line of a predetermined field suppression characteristic.

## Revendications

1. Machine électrique comportant un stator (1) qui porte un enroulement et un rotor (2) mobile en rotation monté à distance de celui dont il est écarté par un entrefer, ce rotor (2) étant essentiellement constitué d'au moins deux segments de rotor coaxiaux (3a, 3b) mobiles en rotation l'un par rapport à l'autre, chaque segment de rotor portant un ensemble d'aimants permanents ayant alternativement des polarités dirigées radialement vers l'extérieur, ainsi qu'un dispositif de réglage (16) pour permettre la rotation des segments de rotor (3a, 3b) l'un par rapport à l'autre,
**caractérisée en ce que**
le dispositif de réglage (16) comporte des moyens de réglage commandables par l'intermédiaire desquels les segments de rotor (3a, 3b) peuvent être orientés avec un décalage en rotation variable indépendant de la vitesse périphérique du rotor (2),
les segments de rotor (3a, 3b) sont montés sur des segments d'arbre (14, 15) d'un arbre principal (6) réalisé sous la forme d'un arbre creux dans lequel est logé un arbre interne (8) mobile en coulissement axial, les deux segments de rotor (3a, 3b) sont logés mobiles en rotation par rapport à l'arbre principal (6), et
l'arbre interne (8) comporte un segment de guidage par l'intermédiaire duquel l'orientation en rotation de l'arbre interne (8) coulissant axialement par rapport à l'arbre principal (6) externe peut être fixée.

2. Machine électrique conforme à la revendication 1,
**caractérisée en ce que**
les moyens de réglage sont réalisés sous la forme d'un élément coulissant permettant le coulissement axial de l'arbre interne (8) qui provoque, en coopération avec des moyens de guidage (4a, 4b, 5a, 5b) venant en prise les uns dans les autres montés sur les arbres (6, 8) une rotation et une orientation librement sélective des segments de rotor (3a, 3b) l'un par rapport à l'autre.

3. Machine électrique conforme à la revendication 1 ou 2,
**caractérisée en ce que**
le rotor (2) comporte plus de deux segments de rotor (3a, 3b, 3c, 3d... 3n) mobiles en rotation les uns par rapport aux autres.

4. Machine électrique conforme à la revendication 1,
**caractérisée en ce que**
tous les seconds segments de rotor (3a, 3c) sont reliés rigidement l'un à l'autre.

5. Machine électrique conforme à l'une des revendications 1 à 4,
**caractérisée en ce que**
les moyens de réglage sont réalisés sous la forme d'un piston hydraulique actionnable par la pression d'huile d'une transmission de véhicule.

6. Machine électrique conforme à l'une des revendications 1 à 5,
**caractérisée en ce que**
les moyens de réglage sont réalisés sous la forme d'un actionneur électrique qui agit sur un élément de réglage auxiliaire monté sur l'arbre interne (8).

7. Machine électrique conforme à l'une des revendications 1 à 6,
**caractérisée en ce que**
les moyens de réglage peuvent être commandés par l'intermédiaire d'un régulateur centrifuge suivant la vitesse périphérique de l'arbre principal (6) du rotor (2).

8. Machine électrique conforme à l'une des revendications 1 à 7,
**caractérisée en ce que**
les moyens de guidage sont réalisés sur l'arbre interne (8) sous la forme de rainures de guidage (4a, 4b) axiales et/ou s'étendant en hélice, et les moyens de guidage sont réalisés sur l'arbre principal (6) sous la forme de talons de guidage (5a, 5b) venant en prise en s'adaptant dans les rainures de guidage (4a, 4b).

9. Machine électrique conforme à la revendication 8,
**caractérisée en ce que**
les rainures de guidage (4a, 4b) présentent par sections des pentes différentes.

10. Machine électrique conforme à la revendication 8 ou 9,
**caractérisée en ce que**
les pentes des rainures de guidage (4a, 4b) sont opposés par sections.

11. Machine électrique conforme à l'une des revendications 9 à 10,
**caractérisée en ce que**
la valeur de la pente des rainures de guidage (4a, 4b) est variable dans un segment d'arbre de l'arbre interne (8).

12. Machine électrique conforme à l'une des revendications 8 à 11,
**caractérisée en ce que**
les rainures de guidage (4a, 4b) estampées différemment concernant leur pente ou leur direction se superposent.

13. Machine électrique conforme à l'une des revendications 1 à 12,
**caractérisée en ce que**
le rotor (2) comporte des éléments élastiques qui appuient les uns contre les autres les différents segments de rotor (3a-n), et, en adaptant la force de rappel des éléments élastiques aux forces magnétiques agissant en rotation apparaissant en fonctionnement entre les segments de rotor (3a-n) on peut régler une position préférentielle du réglage en rotation des segments de rotor (3a-n).

14. Machine électrique conforme à l'une des revendications 1 à 13,
**caractérisée en ce que**
les segments de rotor (3a, 3b) sont réalisés sous la forme de calottes venant en prise les unes dans les autres.

15. Procédé de réglage du champs et de l'induit d'une machine électrique excitée en permanence, en particulier pour des véhicules dont la zone de vitesse de rotation est subdivisée en une zone de réglage d'induit et une zone de réglage de champ, comportant un rotor (2) muni d'au moins deux segments de rotor (3a, 3b) mobiles en rotation l'un par rapport à l'autre conforme à la revendication 1 qui présentent chacun un ensemble d'aimants permanents orientés radialement vers l'extérieur avec des polarités alternées,
**caractérisé en ce que**
par l'intermédiaire de moyens de réglage commandables on peut faire varier le décalage en rotation des segments de rotor (3a-n) de sorte qu'à une vitesse de rotation respective du rotor (2) soit associé un affaiblissement du champ librement sélectionnable,
les segments de rotor (3a-n) sont orientés dans la zone de réglage d'induit sans décalage en rotation, et
dans la zone de réglage du champ, les segments d'induit (3a-n) sont orientés avec un décalage en rotation qui suit une caractéristique d'affaiblissement du champ prédéfinie.
